(19) Europäisches Patentamt
European Patent Office
Office européen des brevets

(11) EP 2 975 365 A1

(12) EUROPEAN PATENT APPLICATION
published in accordance with Art. 153(4) EPC

(43) Date of publication:
20.01.2016 Bulletin 2016/03

(51) Int Cl.:
G01D 5/347 (2006.01)

(21) Application number: 13877764.4

(22) Date of filing: 11.03.2013

(86) International application number:
PCT/JP2013/056696

(87) International publication number:
WO 2014/141370 (18.09.2014 Gazette 2014/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Kabushiki Kaisha Yaskawa Denki
Kitakyushu-shi, Fukuoka 806-0004 (JP)

(72) Inventors:
• YOSHIDA, Yasushi
Kitakyushu-shi, Fukuoka 806-0004 (JP)
• TAKADA, Hiroshi
Kitakyushu-shi, Fukuoka 806-0004 (JP)

(74) Representative: Grünecker Patent- und
Rechtsanwälte
PartG mbB
Leopoldstraße 4
80802 München (DE)

(54) ENCODER, MOTOR WITH ENCODER, AND SERVO SYSTEM

(57) [Problem to be Solved]
To provide an encoder, a motor with encoder, and a servo system which can be reduced in size with a simple configuration.
[Solution]
The encoder 100 including a disk 110 fixed to a shaft SH, a first slit Sa arranged on the disk 110 in a part in a circumferential direction C around a rotation center O of the disk 110 and each configured to reflect light, a light source 121 arranged approximately on a rotational axis AX of the shaft SH and configured to emit light to a region that encompasses at least a rotational locus of the first slit Sa by rotation of the disk 110, and a plurality of first light receiving elements Pa arranged extending along a circumferential direction C around the rotational axis AX and configured to receive light that is reflected by the first slit Sa.

[FIG. 3]

EP 2 975 365 A1

# Description

TECHNICAL FIELD

Disclosed embodiments relate to encoders, motors with encoder, and servo systems.

BACKGROUND ART

Patent Document 1 describes an optical entire-circumference encoder that irradiates substantially all of a plurality of slits formed in an entire circumference of a disk with light and receives the reflected light or transmitted light.

PRIOR ART DOCUMENT

Patent Document

Patent Document 1: JP-5099459

DISCLOSURE OF THE INVENTION

Problem to be solved by the Invention

The optical entire-circumference encoder described above includes a light emitting part, a rotational track with a plurality of rotational slits, a fixed track with a plurality of fixed slits, a light guiding part, a reflecting part, and a light receiving part. The light emitted from the light emitting part is guided by the light guiding part to a plurality of fixed slits via a waveguide that extends in an axis direction while spreading to a radially outer circumferential part from a vicinity of the rotational shaft. The light transmitting through a plurality of fixed slits and a plurality of rotational slits is reflected by the reflecting part toward the plurality of rotational slits. The reflected light is incident upon the light guiding part again, and is then guided toward a vicinity of the rotational shaft while being condensed via the waveguide, and is received by the light receiving part. In the prior-art optical entire-circumference encoder having such a configuration, the device configuration is complicated and large-scaled and thus there is a room to improve in terms of reduction in size.

It is an object of the present invention to provide encoders, motors with encoder, and servo systems that can be reduced in size with a simple configuration.

Means for Solving the Problem

In order to solve the above-mentioned problem, according to an aspect of the present invention, there is provided an encoder including a disk fixed to a rotating body, one or more first slits arranged on the disk in a part in a circumferential direction around a rotation center of the disk and each configured to reflect or transmit light,

a light source arranged approximately on a rotational axis of the rotating body and configured to emit light to a region that encompasses at least a rotational locus of the first slit by rotation of the disk, and a plurality of first light receiving elements arranged extending along a circumferential direction around the rotational axis and configured to receive light that is reflected by or transmits through the first slit.

In order to solve the above-mentioned problem, according to another aspect of the present invention, there is provided a motor with encoder including a motor whose rotor rotates with respect to a stator, and the encoder configured to detect at least one of a position and speed of the rotor.

In order to solve the above-mentioned problem, according to another aspect of the present invention, there is provided a servo system including a motor whose rotor rotates with respect to a stator, the encoder configured to detect at least one of a position and speed of the rotor, and a controller configured to control the motor based on a detection result of the encoder.

Advantages of the Invention

According to an encoder of the present invention, it is possible to achieve reduction in size with a simple configuration.

BRIEF DESCRIPTION OF THE DRAWING

FIG. 1 is an explanatory diagram for illustrating a servo system according to an embodiment.
FIG. 2 is an explanatory diagram for illustrating an encoder according to the embodiment.
FIG. 3 is an explanatory diagram for illustrating a disk according to the embodiment.
FIG. 4 is an explanatory diagram for illustrating an optical module and a light receiving array according to the embodiment.
FIG. 5 is an explanatory diagram for illustrating a disk according to a variation.
FIG. 6 is an explanatory diagram for illustrating an optical module and a light receiving array according to the variation.
FIG. 7 is an explanatory diagram for illustrating an optical module and a light receiving array according to another variation.
FIG. 8 is an explanatory diagram for illustrating an optical module and a light receiving array according to yet another variation.
FIG. 9 is an explanatory diagram for illustrating an optical module and a light receiving array according to yet another variation.
FIG. 10 is an explanatory diagram for illustrating an optical module and a light receiving array according to yet another variation.

FIG. 11 is an explanatory diagram for illustrating an optical module and a light receiving array according to yet another variation.

FIG. 12 is an explanatory diagram for illustrating a disk according to yet another variation.

FIG. 13 is an explanatory diagram for illustrating an optical module and a light receiving array according to yet another variation.

BEST MODE FOR CARRYING OUT THE INVENTION

Hereinafter, an embodiment will be described with reference to the accompanying drawings.

<1. Servo system>

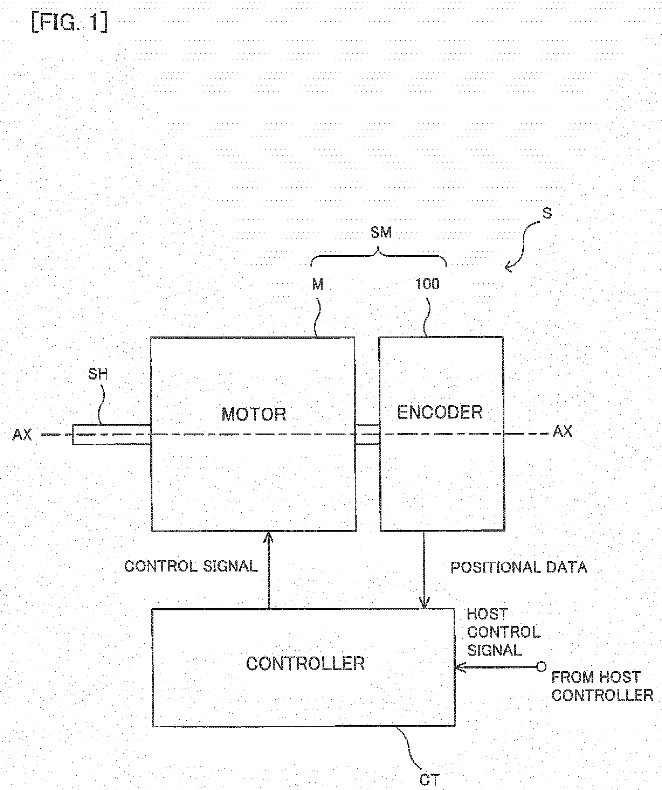

First, the configuration of a servo system according to the embodiment is described with reference to FIG. 1. As illustrated in FIG. 1, a servo system S includes a servo motor SM and a controller CT. The servo motor SM includes an encoder 100 and a motor M.

The motor M is an example of a power generation source without the encoder 100. The motor M is a rotary motor, in which a rotor (not illustrated) rotates with respect to a stator (not illustrated), and outputs a rotational force by rotating, around a rotational axis AX, a shaft SH fixed to the rotor.

Note that the motor M itself may be referred to as a servo motor, but in the embodiment, a configuration including the encoder 100 is referred to as a servo motor SM. That is, the servo motor SM corresponds to an example of the motor with encoder. Hereinafter, for convenience of description, a case is described, where a motor with encoder is a servo motor that is controlled to follow target values, such as a position and a speed. However, the present invention is not necessarily limited to the servo motor. A motor with encoder shall include even the motors used for other than a servo system, as long as an encoder is attached to the motor, e.g., in a case where the output of an encoder is used only for display.

The motor M is not particularly limited as long as the encoder 100 is capable of detecting positional data and the like, for example. Moreover, the motor M is not limited to an electric motor that uses electricity as the power source, but may be a motor using another power source, for example such as a hydraulic motor, a pneumatic motor, or a steam motor. However, for convenience of description, hereinafter, a case is described, where the motor M is an electric motor.

The encoder 100 is coupled to the opposite side of a rotational force output side of the shaft SH of the motor M, but not necessarily limited to the opposite side, and the encoder 100 may be coupled to the rotational force output side of the shaft SH. Moreover, the encoder 100 may not be directly coupled to the motor M, but may be coupled via another mechanism, for example such as a reduction device or a rotation direction conversion device. The encoder 100 detects the position (referred to also as the rotation angle) of the motor M by detecting the position of the shaft SH (rotating body), and outputs positional data indicative of the position.

The encoder 100 may detect, in place of or in addition to the position of the motor M, at least one of the speed (referred to also as the rotation speed, angular velocity, or the like) of the motor M and the acceleration (referred to also as the rotational acceleration, angular acceleration, or the like) of the motor M. In this case, the speed and acceleration of the motor M can be detected, for example, by firstly-differentiating or secondarily-differentiating the position by time or by counting detection signals (e.g., incremental signals described later) for a predetermined time period. For convenience of description, hereinafter, the description is made assuming that the physical quantity detected by the encoder 100 is a position.

The controller CT acquires the positional data output from the encoder 100, and controls the rotation of the motor M based on the positional data. Accordingly, in the embodiment in which an electric motor is used as the motor M, the controller CT controls the rotation of the motor M by controlling the electric current or voltage that is applied to the motor M based on the positional data. Furthermore, the controller CT may acquire a host control signal from a host controller (not illustrated), and control the motor M in the manner that a rotational force capable of realizing a position or the like indicated by the host control signal is output from the shaft SH of the motor M. Note that, when the motor M uses another power source, such as a hydraulic, pneumatic, or steam power source, the controller CT can control the rotation of the motor M by controlling the supply of such power source.

<2. Encoder>

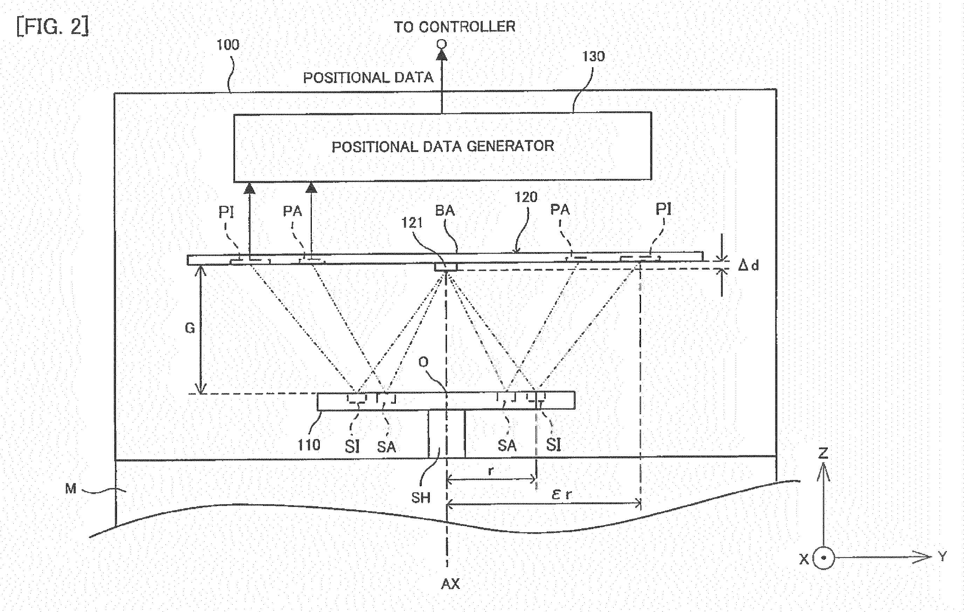

Next, the encoder 100 according to the embodiment is described. As illustrated in FIG. 2, the encoder 100 includes a disk 110, an optical module 120, and a positional data generator 130.

Here, for convenience of description of the structure of the encoder 100, the directions, such as an up-direction and down-direction, are defined as follows and used as needed. In FIG. 2, the direction along which the disk 110 faces the optical module 120, i.e., the positive direction of the Z-axis is defined as "up", and the negative direction of the Z-axis is defined as "down". However, the direction may vary with the installation mode of the encoder 100, and therefore does not limit the positional relationship of each configuration of the encoder 100.

(2-1. Disk)

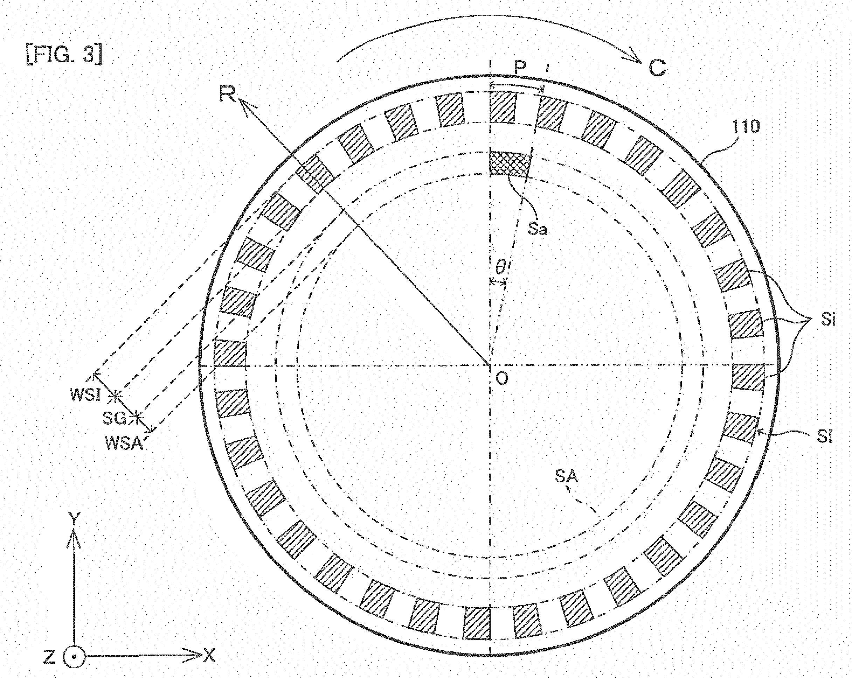

The disk 110 is formed in the shape of a disk as illustrated in FIG. 3, and is arranged in the manner that a rotation center O approximately coincides with the rotational axis AX. Accordingly, the circumferential direction around the rotation center O in the disk 110 approximately coincides with the circumferential direction around the rotational axis AX of the shaft SH. Hereinafter, these directions are collectively referred to as a "circumferential direction C", as needed. The disk 110 is fixed to the shaft SH that is an example of a rotating body, and rotates with the rotation of the shaft SH. Note that, in the embodiment, as an example of a measuring object for measuring the rotation of the motor M, the disk-shaped disk 110 is taken as an example and described, but for example, another member, such as an end face of the shaft SH, may be used as the measuring object. Moreover, in the example illustrated in FIG. 2, the disk 110 is directly coupled to the shaft SH, but may be coupled via a coupling member, such as a hub. In this case, the coupling member, such as a hub, corresponds to an example of the rotating body.

As illustrated in FIG. 3, the disk 110 includes a first slit Sa and a slit track SI. While the disk 110 rotates with the driving of the motor M, the optical module 120 is fixedly arranged in the disk 110 while facing it. Accordingly, the first slit Sa and slit track SI and the optical module 120 relatively rotate each other in the circumferential direction C (the direction of an arrow C illustrated in FIG. 3) as the motor M is driven.

(2-2. Optical detection mechanism)

An optical detection mechanism includes the first slit Sa and slit track SI and the optical module 120. The first slit Sa (grid-shaped hatching portion in FIG. 3) is arranged in a part in the circumferential direction C around the rotation center O in the upper face of the disk 110. Moreover, the slit track SI is arranged in a ring shape about the rotation center O in the upper face of the disk 110. The slit track SI includes a plurality of second slits Si (slash hatching portions in FIG. 3) arranged over the entire circumference along the circumferential direction C. The first slit Sa and the second slit Si each are configured as a reflective slit that reflects the light emitted from a light source 121.

(2-2-1. Disk)

The disk 110 is formed from a material, for example such as metal, which reflects light. Then, a material having a lower reflectivity (e.g., chrome oxide or the like) is arranged, by coating or the like, in a part on the surface of the disk 110, where light is not allowed be reflected, in the manner that a reflective slit is formed in a portion where the material is not arranged. Note that the reflective slit may be formed by forming a portion that does not reflect light, as a rough surface by sputtering or the like and reducing the reflectivity of the portion.

Note that, the material of the disk 110, a method for manufacturing the disk 110, and the like are not limited in particular. For example, the disk 110 may be formed from a material, such as glass or a transparent resin, which transmits light. In this case, the reflective slit may be formed by arranging a light reflective material (e.g., aluminum or the like) on the surface of the disk 110 by vapor deposition or the like.

The first slit Sa is arranged closer to the rotation center O than the slit track SI, i.e., arranged on an inner side of the slit track SI in the radial direction (the direction of an arrow R illustrated in FIG 3, and hereinafter referred to as a "radial direction R", as needed) about the rotation center O of the disk 110, on the upper face of the disk 110. As described above, the first slit Sa is arranged in a part in the circumferential direction C around the rotation center O of the disk 110. Specifically, the first slit Sa is arranged so as to be localized within the range of an angle θ on the slit track SA that is a virtual region over the entire circumference around the rotation center O corresponding to the first slit Sa. Therefore, the first slit Sa is formed in the shape of an arc having the width (the length extending along the radial direction R) of the slit track SA. In the embodiment, the angle θ is an angle corresponding to a pitch P of the second slit Si. Note that the angle θ is not limited to this example, but may be an angle corresponding to an integral multiple of the pitch P.

The slit track SI is arranged concentrically with the slit track SA on the opposite side (outer side in the radial direction R) of the rotation center O from the first slit Sa, on the upper face of the disk 110. The slit track SI includes a plurality of second slits Si that is arranged so as to have an incremental pattern extending along the circumferential direction C around the rotation center O.

The "incremental pattern" is a pattern that is regularly repeated at a predetermined pitch P as illustrated in FIG. 3. Here, the "pitch" refers to the arrangement interval of each second slit Si in the slit track SI having the incremental pattern. The incremental pattern represents the position of the motor M at each one pitch or within one pitch by summing the detection signals of at least one or more light receiving elements. Accordingly, the incremental pattern does not represent the absolute position of the motor M, but can represent a position with extremely high precision as compared with the resolution of an absolute signal based on the first slit Sa and a light receiving array PA described later.

Note that, in the embodiment, as described above, an angle θ corresponding to the circumferential length of the first slit Sa coincides with an angle θ corresponding to the pitch P of the second slit Si of the slit track SI. As a result, the resolution of an absolute signal based on the first slit Sa coincides with the number of second slits Si of the slit track SI. However, the number of second slits Si of the slit track SI is not limited to this example, but is preferably set to the same as the resolution of the absolute signal or more.

(2-2-2. Optical module)

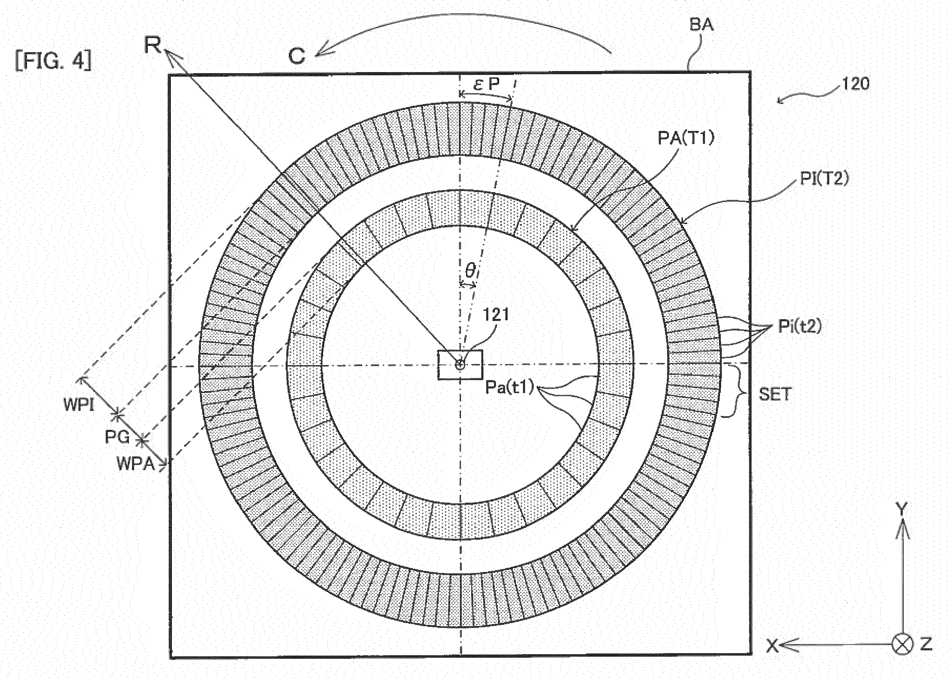

The optical module 120 is formed as one substrate BA parallel to the disk 110, as illustrated in FIG. 2 and FIG. 4. As a result, the encoder 100 can be thinned and the manufacturing of the optical module 120 can be simplifed. Note that the optical module 120 does not necessarily need to be configured as one substrate BA, but may be configured as a plurality of substrates. In this case, these substrates may be collectively arranged. Moreover, the optical module 120 may not necessarily be in the form of substrate.

The optical module 120 includes the light source 121 and a plurality of light receiving arrays PA, PI on a surface facing the disk 110 of the substrate BA, as illustrated in FIG. 2 and FIG. 4.

As illustrated in FIG. 2, the light source 121 is arranged approximately on the rotational axis AX of the shaft SH. Note that, "arranged approximately on the rotational axis AX " as referred to herein does not request in a strict sense that the optical axis of the light source 121 coincides with the rotational axis AX, but allows a manufacturing error in design, and the light source 121 may be arranged in a vicinity of the rotational axis AX (hereinafter, the same applies). The light source 121 emits light to a region that encompasses at least both a rotation locus (i.e., slit track SA) of the first slit Sa due to rotation of the disk 110 and the slit track SI.

The light source 121 is not limited in particular as long as it can emit light to an irradiation region, but an LED (Light Emitting Diode) can be used, for example. The light source 121 is configured as a point light source in which an optical lens or the like is not particularly arranged, and emits diffusion light from a light emitting part. Note that, the "point light source" does not necessary need to be a strict point. Light may be emitted from a finite light emitting surface of a light source if the light source is regarded to be able to emit diffusion light from a approximately punctate position, in design or in principle of operation. Moreover, the "diffusion light" is not limited to the light that is emitted in all directions from a point light source, but includes light that is emitted while being diffused in a finite and definite direction. That is, the "diffusion light" referred to herein includes any light having diffusibility rather than parallel light. The use of such point light source allows the light source 121 to approximately uniformly irradiate the first slit Sa and slit track SI that rotate at the facing positions, with light. Moreover, because condensing and diffusion of light by an optical element are not performed, an error or the like due to the optical element is less likely to be generated and the rectilinearity of light toward the slit track can be improved.

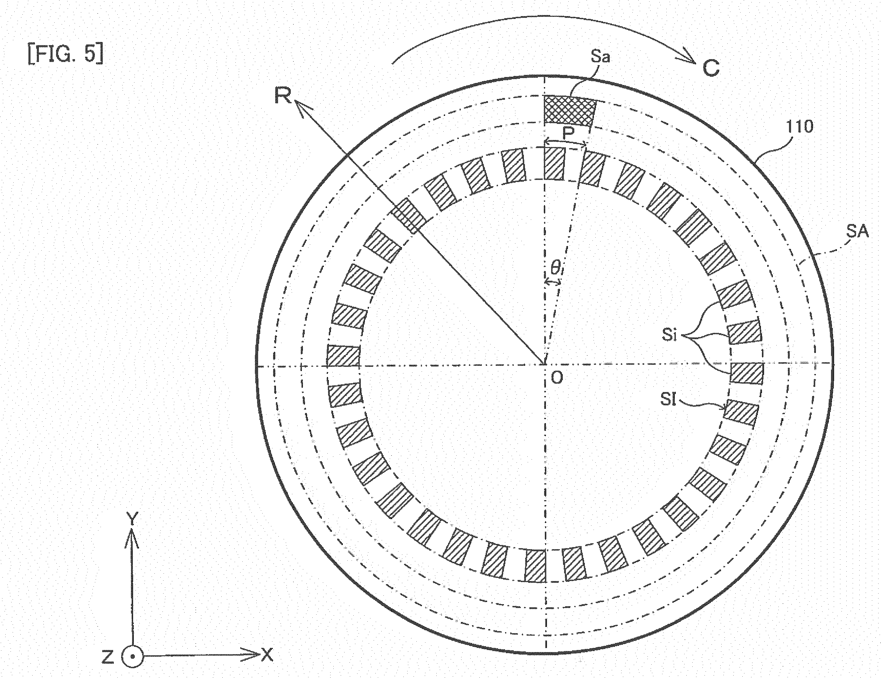

The light receiving arrays PA, PI are arranged concentrically about the light source 121 (rotational axis AX), and the light receiving array PA is arranged spaced apart by a predetermined distance PG from the light receiving array PI in the radial direction R, closer to the rotational axis AX (inner side in the radial direction R) than the light receiving array PI. The light receiving array PA includes a plurality of first light receiving elements Pa (corresponds to a thin dot-hatching portion of FIG. 5) arranged extending along the circumferential direction C around the light source 121 (rotational axis AX) and configured to receive the light reflected by the first slit Sa. Each of the plurality of first light receiving elements Pa is arranged on a split track t1, the split track t1 being obtained by equally dividing, in the circumferential direction C, a first track T1 that is the region over the entire circumference around the light source 121 (rotational axis AX) corresponding to the first light receiving element Pa, by a number (32 in this example) set based on the resolution of the encoder 100. Note that, in the embodiment, the number (i.e., the number of first light receiving elements Pa) set based on the resolution of the encoder 100 is set to 32, but the number of first light receiving elements Pa is not limited thereto.

With the configuration, the light reflected by the first slit Sa that is located at a predetermined rotation angle by rotation of the disk 110 is received by a corresponding first light receiving element Pa among the plurality of first light receiving elements Pa, and a position, where the first light receiving element Pa that output the light receiving signal is arranged, is detected as a position (absolute position) within one rotation of the shaft SH. This light receiving signal is referred to as the "absolute signal." As a result, the absolute position of the shaft SH is detected with a resolution corresponding to the number (32 in this example) of first light receiving elements Pa.

On the other hand, the light receiving array PI is arranged on the opposite side (outer side in the radial direction R) of the rotational axis AX from the light receiving array PA. The light receiving array PI includes a plurality of second light receiving elements Pi (correspond to a thick dot-hatching portion of FIG. 5) arranged extending along the circumferential direction C around the light source 121 (rotational axis AX), and is configured to receive the light reflected by the slit track SI. Each of the plurality of second light receiving elements Pi is arranged on a split track t2, the split track t2 being obtained by equally dividing, in the circumferential direction C, a second track T2 that is the region over the entire circumference around the light source 121 (rotational axis AX) corresponding to the light receiving array PI, by a number (128 in this example) set based on the resolution of the encoder 100.

Four second light receiving elements Pi are arranged in the range of the angle $\theta$ corresponding to one pitch of the first light receiving element Pa. That is, the light receiving array PI includes a plurality of sets (indicated by "SET" in FIG. 4) that is arranged extending along the circumferential direction C, the set including four second light receiving elements Pi arranged within one pitch (one pitch in a projected image, i.e., $\varepsilon \times P_0$, where $\varepsilon$ is described later) of the incremental pattern of the slit track SI. Then, in the incremental pattern, because the reflective slit is repeatedly formed at each pitch, each second light receiving element Pi generates one cycle (360° in electric angle) of periodic signal per one pitch as the disk 110 rotates. Then, because four second light receiving elements Pi are arranged in one set corresponding to one pitch, the adjacent light receiving elements in one set will detect periodic signals each having a 90° phase difference from each other. The respective light receiving signals are referred to as an A phase signal, a B phase signal (having a 90° phase difference relative to the A phase signal), an A-bar phase signal (having a 180° phase difference relative to the A phase signal), and a B-bar phase signal (having a 180° phase difference relative to the B phase signal).

Because the incremental pattern represents a position in one pitch, the signal of each phase in one set and the signal of each phase in another set corresponding thereto will have similarly varying values. Accordingly, the signals of the same phase are added across a plurality of sets. Accordingly, from a large number of second light receiving elements Pi of the light receiving array PI illustrated in FIG. 4, four signals whose phases shift from each other by 90° will be detected. These four signals are referred to as the "incremental signal."

By using signals whose phases differ from each other by 90°, e.g., by using the B phase signal in addition to the A phase signal, the rotation direction of the disk 110 can be detected depending on whether the phase of a signal firstly detected is the A phase or B phase. Moreover, by using the signals whose phases differ from each other by 180°, i.e., by using the signal of the A-bar phase or B-bar phase in addition to the A phase or B phase, the reliability of the signal can be secured. Furthermore, by arranging a plurality of sets extending along the circumferential direction C, the place where the signal of each phase is detected is distributed in a wide range and the signals of the same phase are added and averaged across a plurality of sets as described above, in the manner that an influence of a variation in the amount of received light can be reduced.

Note that, in the embodiment, a case is described, where four light receiving elements are included in one set corresponding to one pitch of the incremental pattern, as an example, but the number of light receiving elements in one set is not limited in particular, and for example two light receiving elements (for the A phase and for the B phase) may be included in one set.

As the first light receiving element Pa and second light receiving element Pi, a photodiode can be used, for example. However, they are not limited to the photodiode, and are not limited in particular as long as the element can receive the light emitted from the light source 121 and convert it to an electric signal.

Note that the light emitted from the light source 121 is diffusion light. Accordingly, the image of a slit track projected on the optical module 120 is enlarged by a predetermined magnification ε corresponding to an optical path length. That is, as illustrated in FIG. 3 and FIG. 4, if the length in the radial direction R of each of the slit tracks SA, SI is designated by WSA, WSI, respectively, and the length in the radial direction R of a shape of the reflection light of each of the slit tracks SA, SI projected on the optical module 120 is designated by WPA, WPI, respectively, then WPA, WPI are ε times of WSA, WSI, respectively. Similarly, a gap PG in the radial direction R between the light receiving array PA and the light receiving array PI also becomes ε times of a gap SG in the radial direction R between the slit track SA and the slit track SI. Note that, in the embodiment, as illustrated in FIG. 4, an example is illustrated, in which the length in the radial direction R of each of the light receiving arrays PA, PI is set approximately equal to the length of the shape of each of the slit tracks SA, SI projected on the optical module 120. However, the length in the radial direction R of each of the light receiving arrays PA, PI is not necessarily limited to this example.

Similarly, the length in the circumferential direction C in the optical module 120 results in the length of a shape of the circumferential direction C in the disk 110 projected on the optical module 120, i.e., the shape influenced by the magnification ε. That is, as illustrated in FIG. 2 the length in the circumferential direction C in the disk 110 results in the length of a circular shape with a radius r about the rotation center O (rotational axis AX), and the length in the circumferential direction C projected on the optical module 120 similarly results in the length of a circular shape with the radius r enlarged by the magnification ε about the rotational axis AX.

As illustrated in FIG. 2, when a gap length between the optical module 120 and the disk 110 is designated by G and a projecting amount from the substrate BA of the light source 121 is designated by Δd, the magnification ε is given by Formula 1 below.

$$\varepsilon = (2G - \Delta d)/(G - \Delta d) \qquad \text{(Formula 1)}$$

(2-3. Positional data generator)

The positional data generator 130 acquires, at a timing when the absolute position of the motor M is measured, the absolute signal representing an absolute position and the incremental signal including four signals whose phases shift from each other by 90°, from the optical module 120. Then, the positional data generator 130 calculates, based on the acquired signals, the absolute position of the motor M represented by these signals and outputs the positional data representing the absolute position to the controller CT.

The positional data generator 130 corresponds to an example of the means for generating positional data. Note that, the method for generating positional data by the positional data generator 130 is not limited in particular, but various methods can be used. Here, an example is described, in which the absolute position is calculated from the incremental signal and the absolute signal to generate positional data.

The positional data generator 130 first identifies the position (absolute position) within one rotation of the shaft SH based on a light receiving signal of the first light receiving element Sa. That is, the light reflected by the first slit Sa located at a predetermined rotation angle by rotation of the disk 110 is received by a corresponding first light receiving element Pa among a plurality of first light receiving elements Pa in the light receiving array PA, and the corresponding first light receiving element Pa outputs a light receiving signal to the positional data generator 130. Then, for example, the positional data generator 130 is connected in parallel to a plurality of first light receiving elements Pa, respectively, in the manner that the position, where the first light receiving element Pa that output the light receiving signal is arranged, can be identified as the absolute position of the shaft SH.

Note that, when the first slit Sa is located facing an intermediate position between two adjacent first light receiving elements Pa (located facing in the travelling direction of light), in other words, when each of the adjacent first light receiving elements Pa is located facing a vicinity of an edge of the first slit Sa, the detection accuracy of the absolute position might decrease because the amplitudes of the light receiving signals of both the adjacent first light receiving elements Pa become a transitional point between "H" (a state where the amplitude of the signal exceeds a threshold) and "L" (a state where the amplitude of the signal is equal to or less than the threshold) and unstable. Then, the positional data generator 130 can determine which first light receiving element Pa the first slit Sa is located facing, using the incremental signal including four signals whose phases shift from each other by 90°. Accordingly, the encoder 100 according to the embodiment can more accurately identify the absolute position from the absolute signal.

On the other hand, the positional data generator 130 mutually subtracts the incremental signals each having a 180° phase difference from each other among the respective incremental signals of four phases from the light receiving array PI. As describe above, by subtracting the signals each having a 180° phase difference from each other, a manufacturing error, a measurement error, and the like of the reflective slits within one pitch can be canceled. The signals as a result of subtraction described above are referred to as a "first incremental signal" and a "second incremental signal", herein. These first incremental signal and second incremental signal (simply referred to as an "A phase signal" and a "B phase signal", or the like) each have a 90° phase difference from each other in electric angle. Then, from these two signals, the positional data generator 130 identifies a position within one pitch. This method for identifying a position within one pitch is not limited in particular. For example, when the incremental signal that is a periodic signal is a sinusoidal signal, the examples of the method for identifying a position within one pitch include a method for calculating an electric angle $\varphi$ by calculating the arctangent of a dividing result of two sinusoidal signals of the A phase and B phase. Alternatively, there is also a method for converting two sinusoidal signals to an electric angle $\varphi$ using a tracking circuit. Alternatively, there is also a method for identifying an electric angle $\varphi$ associated with the values of the signals of the A phase and B phase in a table produced in advance. Note that, in this case, the positional data generator 130 preferably analog-to-digital converts two sinusoidal signals of the A phase and B phase for each detection signal and multiplies (interpolates and divides) the resulting two digital signals to improve the resolution and then generates the positional data.

Then, the positional data generator 130 generates the positional data representing an accurate absolute position by combining an absolute position of a relatively coarse accuracy based on the absolute signal with an accurate position within one pitch based on the incremental signal.

<3. Example of effects obtained by embodiment>

In the embodiment described above, the first slit Sa is arranged in a part in the circumferential direction C around the rotation center O of the disk 110. Moreover, the light source 121 is arranged on the rotational axis AX of the shaft SH, and the light source 121 emits light to a region that encompasses at least the rotation locus of the first slit Sa by rotation of the disk 110. The light reflected by the first slit Sa located at a predetermined rotation angle by rotation of the disk 110 is received by a corresponding first light receiving element Pa among a plurality of first light receiving elements Pa arranged extending along the circumferential direction C around the rotational axis AX. As a result, with the resolution corresponding to the number of first light receiving elements Pa, a position (absolute position) within one rotation of the shaft SH is detected.

The encoder 100 configured in this manner does not need a fixed slit and a light guide member or the like for guiding the emitted light of the light source 121 to the first slit Sa and guiding the reflection light thereof to the first light receiving element Pa. Accordingly, the device configuration can be simplified, and a reduction in size of the encoder 100 can be achieved. Moreover, the examples of the encoder that detects the absolute position include a Gray code encoder and a multiplex incremental signaling type encoder, which however need a slit and a light receiving element, each having a plurality of tracks. In contrast, the encoder 100 of the embodiment is suitable for a reduction in size because it can detect the absolute position using one track.

In the encoder 100, due to a mechanical fluctuation, a temperature change, and the like, the gap between the light source 121 or first light receiving element Pa and the disk 110 (the first slit Sa) may vary. Then, for example, in the case of an encoder that emits light to a partial region in the circumferential direction C of the disk 110 and uses the reflection light thereof or the like, when the gap varies, the projection image of the first slit Sa by the reflection light or the like will fluctuate in angle, thus resulting in a reduction in detection accuracy. In the embodiment, the reflection light and the like obtained from the entire circumference is used, and therefore even if the gap varies, the projection image of the first slit Sa will not fluctuate in angle. Accordingly, even if the gap varies, the absolute position can be accurately detected and thus the detection accuracy is superior.

For example, when the rotation center O of the disk 110 and the rotational axis AX of the shaft SH are eccentric, an error is generated in the positional relationship between the first slit Sa and the first light receiving element Pa. In the embodiment, the light source 121 emits light to a region that encompasses at least the rotation locus of the first slit Sa, i.e., the entire circumference of the disk 110, and receives the reflection light thereof, and therefore even if an error is generated in the positional relationship between the first slit Sa and the first light receiving element Pa, the error can be cancelled, for example, by summing the receiving light signals of the first light receiving elements Pa that are arranged at the positions different by 180° in the circumferential direction. Accordingly, the robustness against eccentricity can be improved.

Moreover, in the embodiment, the absolute position is detected based on the light receiving signal (one-bit signal) of each first light receiving element Pa. Accordingly, the absolute position can be identified using one-bit signal, not using a signal including a plurality of bits as with a random system, in which for example a random signal pattern (serial bit sequence) of one track is arranged in the disk 110 and the absolute position is detected based on the light receiving signals from a plurality of light receiving elements. Therefore, the amount of signal processing can be reduced. As a result, the processing speed will increase and thus the generation of a deviation in measurement timing can be suppressed. Moreover, because the number of bits of the light receiving signal is small, the absolute position can be easily corrected.

Moreover, in the embodiment, in particular, the first slit Sa is configured to reflect the light emitted from the light source 121, and the first light receiving element Pa is configured to receive the light reflected by the first slit Sa. By configuring the encoder 100 as a reflective encoder in this manner, a plurality of first light receiving elements Pa can be arranged close to the light source 121. Therefore, a further reduction in size of the device can be achieved.

Moreover, in the embodiment, in particular, the encoder 100 includes the slit track SI having the incremental pattern included in the disk 110 and the light receiving array PI configured to receive the light reflected by the slit track SI. Therefore, by interpolating and dividing the incremental signal, an accurate absolute position can be detected. Accordingly, a compact and high-resolution absolute-value encoder can be obtained.

Moreover, in the embodiment, in particular, four second light receiving elements Pi are arranged in an angle range corresponding to one pitch of the first light receiving element Pa. If only one second light receiving element Pi is arranged in the one-pitch range of the first light receiving element Pa, then there is a possibility below. That is, when the first light receiving element Pa is located facing a vicinity of the edge of the first slit Sa, the second light receiving element Pi is also located facing the vicinity of the edge of the second slit Si and the amplitude of the light receiving signal is in the transitional region of a bit (between "H" and "L" of the light receiving signal). Therefore, the detection accuracy of the absolute position might decrease. In order to avoid this, two first slits Sa are offset in the radial direction R so as to form two tracks, and furthermore the two slits Sa (possibly first light receiving elements Pa) are offset from each other by a predetermined pitch (e.g., a half pitch) in the circumferential direction C, in the manner that when the amplitude of the light receiving signal of one of the first light receiving elements Pa becomes in the transitional region of a bit, the absolute position can be identified using the light receiving signal from the other first light receiving element Pa, or vice versa. As a result, the detection accuracy of the absolute position can be improved. However, in this case, the first slit Sa and the first light receiving element Pa need to be arranged on two tracks, thus possibly resulting in an increase in size of the encoder 100.

Then, in the embodiment, four second light receiving elements Pi are arranged in the angle range corresponding to one pitch of the first light receiving element Pa, in the manner that even when the amplitude of the light receiving signal of one of the first light receiving elements Pa becomes in the transitional region of a bit, the absolute position can be identified depending on whether the light receiving signal of the second light receiving element Pi is within a range from 270° to 360° or a range from 0° (360°) to 90° in electric angle, for example. Accordingly, there is no need to form the first slit Sa and the first light receiving element Pa on two tracks, unlike the above, and the first slit Sa and the first light receiving element Pa just need to be arranged on one track. Therefore, the encoder 100 can be further miniaturized.

Moreover, in the embodiment, in particular, a plurality of first light receiving elements Pa is arranged closer to the rotational axis AX, i.e., closer to the inner peripheral, than the light receiving array PI. As described above, the resolution of the absolute signal based on the first slit Sa and first light receiving element Pa coincides with the number of second slits Si of the slit track SI. Accordingly, as illustrated in FIG. 3, a corresponding angle θ of the circumferential length of the first slit Sa coincides with a corresponding angle θ of the pitch P of the second slit Si of the slit track SI. However, because the incremental signal based on the second slit Si is a periodic signal of one cycle in one pitch, the circumferential length of the second slit Si is approximately a half of the pitch P. Therefore, the second slit Si has a circumferential length shorter rather than the first slit Sa.

In the embodiment, a plurality of first light receiving elements Pa is arranged closer to the inner peripheral than the light receiving array PI, and therefore on the disk 110 side, the slit track SI will be arranged closer to the outer peripheral than the first slit Sa. As a result, a larger circumferential length of the second slit Si can be secured. As a result, due to the relationship with the light source width of the light source 121, a reduction of the detection accuracy (accuracy of the incremental signal) of the second slit Si can be prevented.

Moreover, in the embodiment, in particular, a plurality of first light receiving elements Pa is arranged spaced by the predetermined distance PG from the light receiving array PI in the radial direction R about the rotational axis AX. Due to this gap, for example even when the rotation center O of the disk 110 and the rotational axis AX of the shaft SH are eccentric and an error is generated in positional relationships between the first slit Sa and the first light receiving element Pa and between the slit track SI and the light receiving array PI, this error can be absorbed and a crosstalk generated between the first light receiving element Pa and the light receiving array PI can be reduced. Accordingly, the robustness against eccentricity can be further increased.

<4. Variations>

Hereinabove, an embodiment has been described with reference to the accompanying drawings. However, the scope of the technical idea set forth in the claims is not limited to the embodiment described here. It is obvious that those skilled in the art which the embodiment belongs to would conceive to perform various changes, modifications, combinations, and the like within the scope of the technical idea. Accordingly, the techniques after these changes, modifications, combinations, and the like are performed shall also naturally belong to the scope of the technical idea set forth in the claims. Hereinafter, these variations are described one by one.

(4-1. Case where light receiving array PA is arranged on outer peripheral side of light receiving array PI)

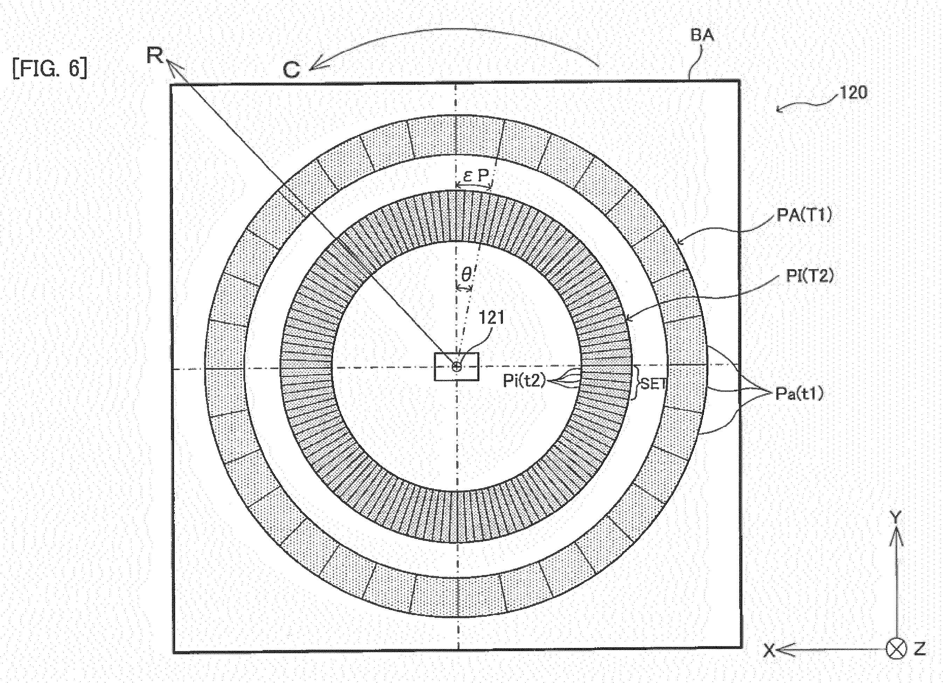

In the embodiment, a case has been described, where the light receiving array PA is arranged closer to the inner peripheral than the light receiving array PI, but on the contrary the light receiving array PA may be arranged on the outer peripheral side. The variation is described using FIG. 5 and FIG. 6.
As illustrated in FIG. 5, the first slit Sa is arranged on the opposite side of the rotation center O from the slit track SI, i.e., on the outside of the slit track SI in the radial direction R about the rotation center O of the disk 110. The first slit Sa is, as with the embodiment, arranged so as to be localized in a range of the angle θ corresponding to a part in the circumferential direction C around the rotation center O of the disk 110, i.e., the pitch P of the second slit Si on the slit track SA. Moreover, the slit track SI includes, as with the embodiment, a plurality of second slits Si arranged so as to have an incremental pattern extending along the circumferential direction C around the rotation center O.
As illustrated in FIG 6, the light receiving arrays PA, PI are arranged concentrically about the light source 121 (rotational axis AX), and the light receiving array PA is arranged on the opposite side (outer side in the radial direction R) of the rotational axis AX from the light receiving array PI. As with the embodiment, each of a plurality of first light receiving elements Pa of the light receiving array PA is arranged on the split track t1, the split track t1 being obtained by equally dividing, in the circumferential direction C, the first track T1 that is the region over the entire circumference around the light source 121 (rotational axis AX) corresponding to the first light receiving element Pa, by a number (32 in this example) set based on the resolution of the encoder 100. Similarly, each of a plurality of second light receiving elements Pi of the light receiving array PI is arranged on the split track t2, the split track t2 being obtained by equally dividing, in the circumferential direction C, the second track T2 that is the region extending across the entire circumference around the light source 121 (rotational axis AX) corresponding to the light receiving array PI, by a number (32 in this example) set based on the resolution of the encoder 100. Four second light receiving elements Pi are arranged in the range of the angle θ corresponding to one pitch of the first light receiving element Pa.
When the amount of received light of the first light receiving element Pa is increased and the detection accuracy of the absolute signal is increased by increasing the circumferential length of the first slit Sa and the area of each first light receiving element Pa, a configuration may be employed, in which the light receiving array PA is arranged closer to the outer peripheral than the light receiving array PI and the first slit Sa is arranged closer to the outer peripheral than the slit track SI in the disk 110, as with the variation.

(4-2. Case where parts of light receiving array PA and light receiving array PI are not arranged)

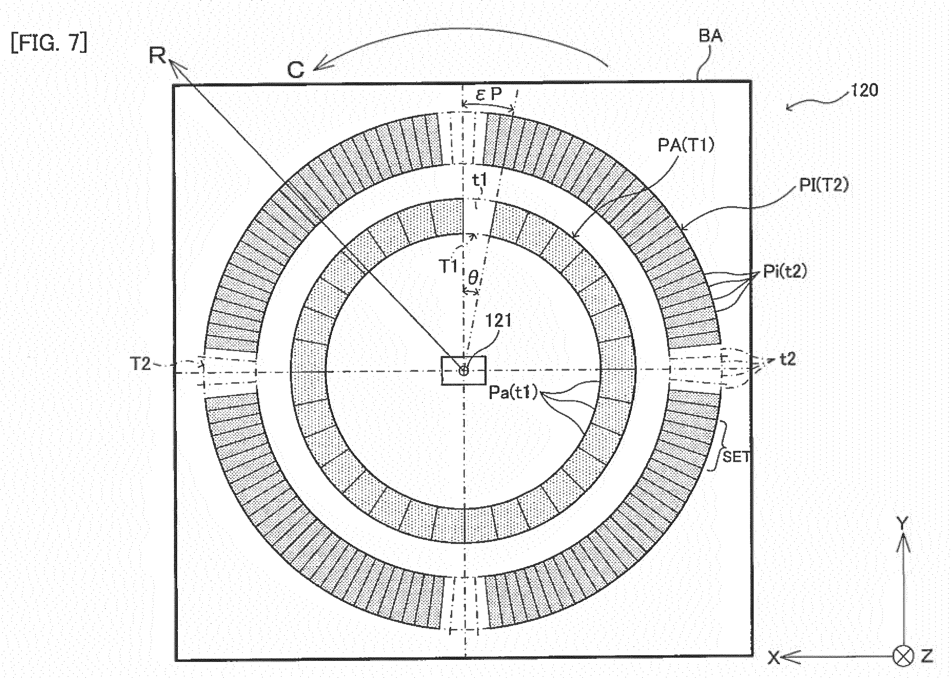

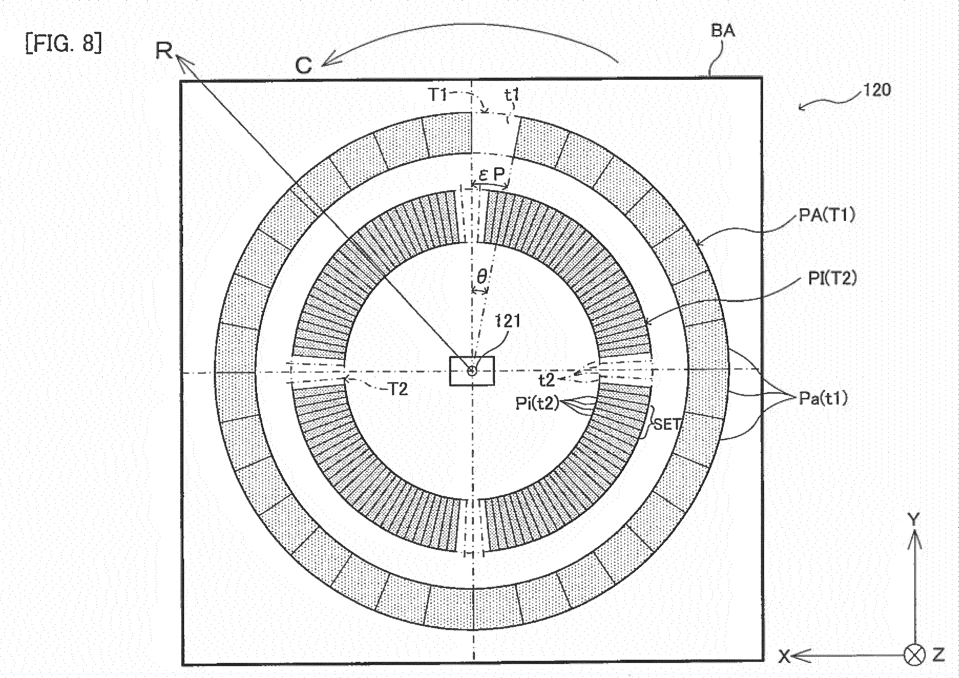

In the embodiment, a case has been described, where the light receiving array PA and light receiving array PI are configured in the manner that each light receiving element is arranged over the entire circumference in the circumferential direction C, but for example, a configuration may be employed, in which the light receiving element is not arranged in a part in the circumferential direction C. The variation is described using FIG. 7 and FIG. 8.
FIG. 7 illustrates a case where the light receiving array PA is arranged closer to the inner peripheral than the light receiving array PI. As illustrated in FIG 7, each of a plurality of first light receiving elements Pa of the light receiving array PA is arranged on the rest of the split tracks t1, the split tracks t1 are obtained by equally dividing the first track T1 in the circumferential direction C by a number (32 in this example) set based on the resolution of the encoder 100, the rest of the split tracks t1 are obtained by excluding any one of the split tracks t1 (a split track t1 on which the first light receiving element Pa illustrated in FIG. 7 is not arranged) from the split tracks t1. That is, the first light receiving element Pa is not arranged in any one of the split tracks t1 in the first track T1. Note that, the arrangement configuration illustrated in FIG. 7 is an example, and one split track t1 on which the first light receiving element Pa is not arranged can be set at any position.

Even in this case, when the first slit Sa is located facing the split track t1 on which the first light receiving element Pa is arranged, the light receiving signal ("H" signal) is output from any one of the first light receiving elements Pa, while when the first slit Sa is located facing the split track t1 on which the first light receiving element Pa is not arranged, the light receiving signal ("H" signal) is output from none of the first light receiving elements Pa. Therefore, if there is one split track t1 on which the first light receiving element Pa is not arranged, a position within one rotation of the shaft SH can be identified. That is, the positional data generator 130 identifies, when the light emitted from the light source 121 is reflected by the split track t1 on which the first light receiving element Pa is not arranged, a position within one rotation without using the light receiving signal from the first light receiving element Pa.

The light receiving array PI is configured in the manner that each of the second light receiving elements Pi is arranged on the rest of the split tracks t2, the split tracks t2 are obtained by equally dividing the second track T2 in the circumferential direction C by a number (128 in this example) set based on the resolution of the encoder 100, the rest of the split tracks t2 are obtained by excluding any one or more of the split tracks t2 from the split tracks t2. In the variation, as illustrated in FIG. 7, the light receiving array PI is configured in the manner that each of the second light receiving elements Pi is arranged on the split tracks t2, excluding every four split tracks t2 respectively arranged at four places at every 90° in the circumferential direction C in the second track T2. That is, at four places at every 90° in the circumferential direction C in the second track T2, the second light receiving element Pi is not arranged in four split tracks t2, respectively.

Note that the arrangement configuration of the second light receiving element Pi is not limited to the example illustrated in FIG. 7. For example, at six places at every 60° in the circumferential direction C, a region where the second light receiving element Pi is not arranged may be disposed. Moreover, in each region, the number of split tracks t2 on which the second light receiving element Pi is not arranged is not limited to four, but may be another number (2, 8, or etc.).

Even if some of the second light receiving elements Pi are not arranged in this manner, an influence on the detection accuracy is small and thus can be neglected because the incremental signal from the light receiving array PI is added by the signals of the same phase across a plurality of second light receiving elements Pi as described above.

FIG. 8 illustrates a case where the light receiving array PA is arranged closer to the outer peripheral than the light receiving array PI. Because the configuration of the light receiving array PA and light receiving array PI is the same as that of FIG. 7 except that the arrangement configuration in the radial direction R of the light receiving array PA and light receiving array PI is reversed, the description thereof is omitted.

Note that, in the examples illustrated in FIG. 7 and FIG. 8, the light receiving element is not arranged in a part in the circumferential direction C of both the light receiving array PA and the light receiving array PI, but a configuration may be employed, in which the light receiving element is not arranged in a part in the circumferential direction C of either one of the light receiving array PA and light receiving array PI.

When the wire routing on the substrate BA is attempted to be simplified, a configuration may be employed, in which a region where the first light receiving element Pa is not arranged is disposed on the first track T1, as with the variation. As a result, the wirings for elements (the light source 121 in the example of FIG 7, the light source 121 and each second light receiving element Pi in the example of FIG. 8) arranged on the inner peripheral side of the light receiving array PA are allowed to pass through the region where the first light receiving element Pa is not arranged. Moreover, there is also an effect that the cost can be reduced by the amount of reduction in the number of first light receiving elements Pa.

When the wire-routing on the substrate BA is attempted to be further simplified, a configuration may be employed, in which a region, where the second light receiving element Pi is not arranged, is disposed on the second track T2, as with the variation. As a result, the wirings for elements (the light source 121 and each first light receiving element Pa in the example of FIG. 7, the light source 121 in the example of FIG. 8) arranged on the inner peripheral side of the light receiving array PI are allowed to pass through the region where the second light receiving element Pi is not arranged. Moreover, there is also an effect that the cost can be reduced by the amount of reduction in the number of second light receiving elements Pi.

Furthermore, when a reduction in the robustness against eccentricity is attempted to be prevented, a configuration may be employed, in which the split track t2, on which the second light receiving element Pi is not arranged, is arranged at every 90° (or may be arranged at every 60°) in the circumferential direction in the second track T2, as with the variation. As a result, the symmetry of the light receiving array PI can be secured.

Note that, in FIG. 7 and FIG. 8, a region where the light receiving element Pa is not arranged is disposed in a part of the track T1, but not limited thereto. For example, although the light receiving element Pa is arranged in all the regions on the track T1, the positional data generator 130 may identify, when the light emitted from the light source 121 is reflected by the first slit Sa to a specific region on the tracks T1, T2, a position within one rotation without using the light receiving signal. That is, when light is reflected by a specific region of the track T1 in this manner, the positional data generator 130 identifies a position within one rotation by the fact that it has not obtained the light receiving signal from a light receiving element Pa except the relevant light receiving element Pa of a specific region. That is, the light receiving element Pa arranged in a specific region will not contribute to position detection. As a result, it is possible, for example, to arrange the light receiving element Pa and at the same time route wirings thereon, and therefore as with the above case, an effect that the wire-routing on the substrate BA can be simplified is obtained. Note that, also in the track T2, as with the above case, the light receiving element Pi may be arranged in all the regions and at the same time a light receiving signal from the light receiving element Pi arranged in a specific region may be prevented from being used.

(4-3. Case where gap is not disposed between light receiving array PA and light receiving array PI)

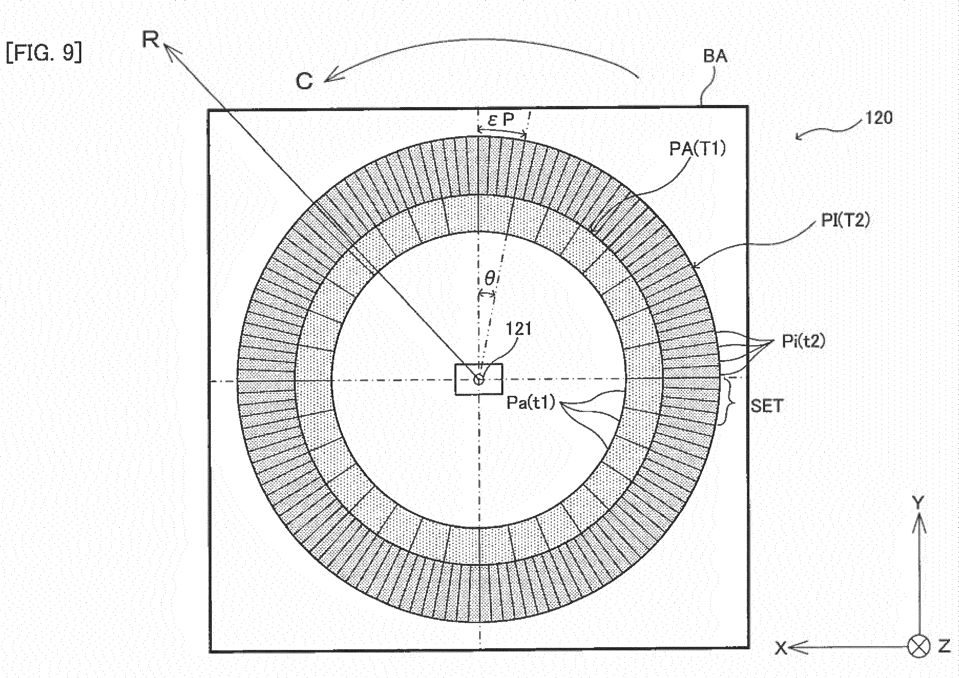

In the embodiment, a case has been described, where the light receiving array PA is arranged spaced by the predetermined distance PG from the light receiving array PI in the radial direction R, but a configuration may be employed, in which a gap is not disposed between the light receiving arrays PA, PI. The variation is described using FIG. 9 to FIG. 11.

FIG. 9 illustrates a case where the light receiving array PA is arranged closer to the inner peripheral than the light receiving array PI. As illustrated in FIG. 9, a plurality of first light receiving elements Pa of the light receiving array PA is arranged so as to contact the light receiving array PI in the radial direction R about the light source 121 (rotational axis AX). Because the other configurations are the same as the embodiment described above, the description thereof is omitted.

Even a gap is not disposed between the light receiving array PA and the light receiving array PI in this manner, an influence of the crosstalk generated between the light receiving array PA and the light receiving array PI is considered to be small due to the following reasons. That is, the light receiving signal (incremental signal) of the light receiving array PI is added by the signals of the same phase across a plurality of second light receiving elements Pi and averaged, and therefore a crosstalk from the light receiving array PA to the light receiving array PI has a small influence on the light receiving signal of the light receiving array PI. On the other hand, a threshold at which the light receiving signal of the second light receiving element Pi becomes "H" is significantly lower than a threshold at which the light receiving signal of the first light receiving element Pa becomes "H", i.e., the amount of received light in the second light receiving element Pi is significantly smaller than the amount of received light in the first light receiving element Pa, and therefore a crosstalk from the light receiving array PI to the light receiving array PA has a small influence on the light receiving signal of the first light receiving element even if a part of the light to be received by the second light receiving element Pi is received by the first light receiving element Pa. Accordingly, even if a gap is not disposed between the light receiving arrays PA, PI, an accurate absolute position can be detected.

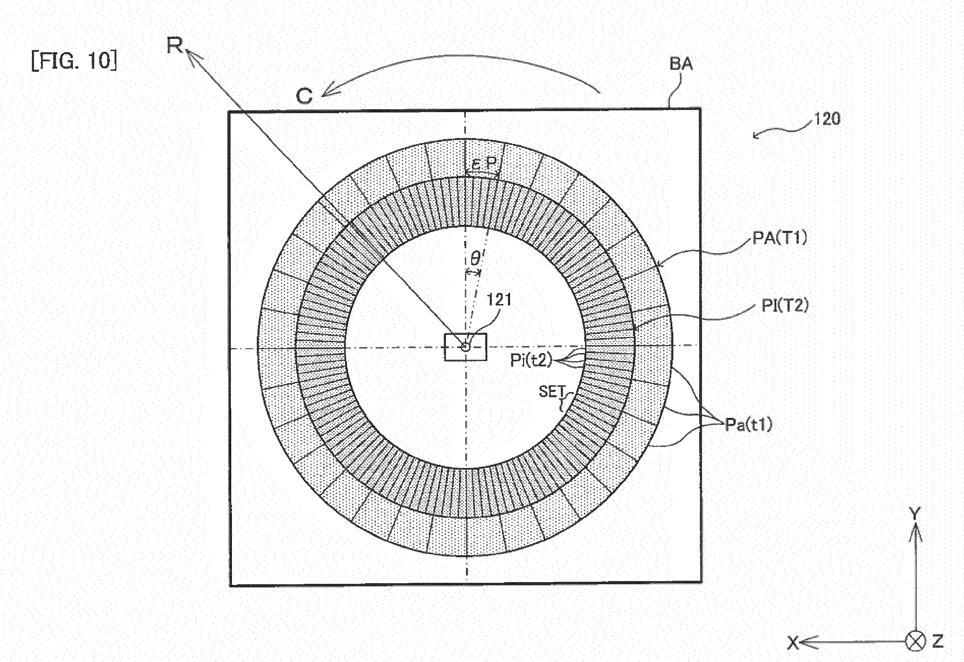

FIG. 10 illustrates a case where the light receiving array PA is arranged closer to the outer peripheral than the light receiving array PI. Because the configuration of the light receiving array PA and light receiving array PI is the same as that of FIG. 9 except that the arrangement configuration in the radial direction R of the light receiving array PA and light receiving array PI is reversed, the description thereof is omitted.

When attempting to achieve a further reduction in size of the encoder 100, a configuration may be employed, in which the light receiving array PA and the light receiving array PI are arranged in contact with each other, as with the variation. As a result, as compared with the case where a gap is disposed between the light receiving array PA and the light receiving array PI, the diameter of the light receiving array on the outer peripheral side can be reduced by the amount of this gap. Moreover, a light-receiving area of each light receiving array may be increased by the amount of the gap without reducing the diameter of the light receiving array on the outer peripheral side.

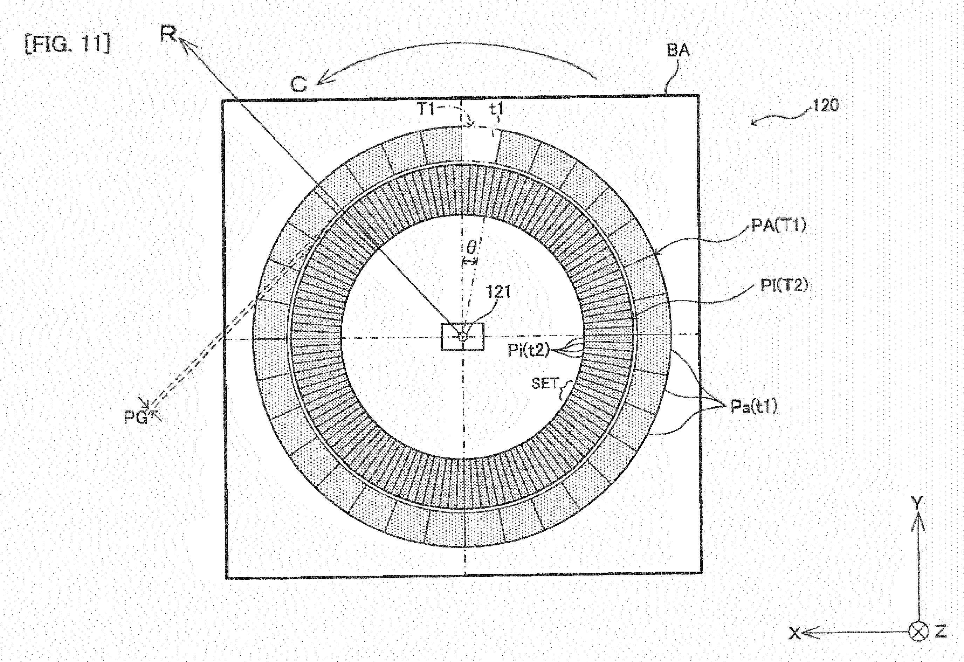

Note that, in the examples illustrated in FIG 9 and FIG. 10, the light receiving array PA and the light receiving array PI are arranged so as to contact with each other in the radial direction R, but the light receiving array PA and the light receiving array PI does not necessarily need to be contacted to each other. For example, when a space for routing wirings from each second light receiving element Pi of the light receiving array PI arranged on the inner peripheral side is secured while achieving a reduction in size of the encoder 100, the light receiving array PA and the light receiving array PI maybe arranged with a very small distance PG therebetween in the radial direction R, as illustrated in FIG 11. In the example illustrated in FIG. 11, the split track t1 on which the first light receiving element Pa is not arranged is disposed on the first track T1, in the manner that the wirings from each second light receiving element Pi can be routed in a gap between the light receiving arrays PA, PI and concentrated on the split track t1, and collectively passed therethrough.

Note that, in the example illustrated in FIG. 11, the light receiving array PA may be arranged on the inner peripheral side of the light receiving array PI, or a region where the second light receiving element Pi is not arranged may be further disposed on the second track T2 of the light receiving array PI.

(4-4. Case where light receiving array PA and light receiving array PI are overlappingly arranged)

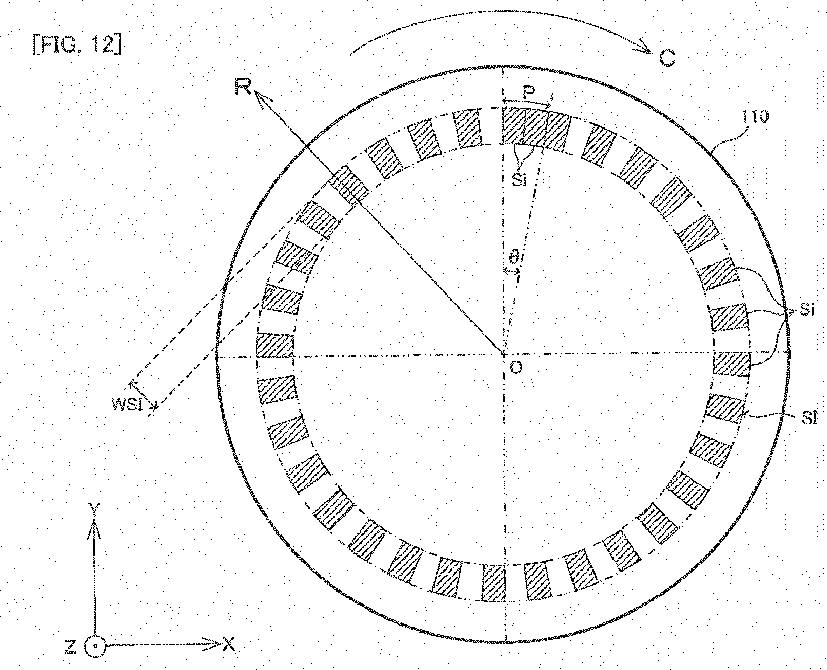

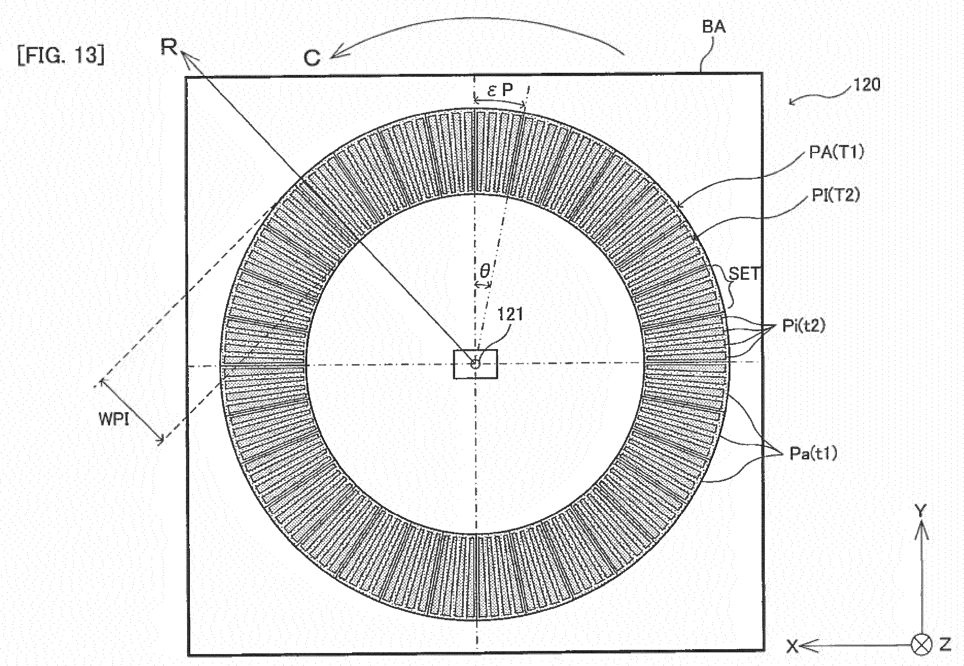

In the embodiment, a case has been described, where the light receiving array PA and the light receiving array PI are offset in the radial direction R and concentrically arranged. However, the arrangement configuration of the light receiving arrays PA, PI is not limited thereto, and for example, the light receiving arrays PA, PI may be overlappingly arranged on one track. The variation is described using FIG. 12 and FIG. 13.

As illustrated in FIG. 12, in the disk 110, the slit track SI including a plurality of second slits Si that is arranged so as to have the incremental pattern extending along the circumferential direction C around the rotation center O is disposed, but unlike the embodiment described above, the first slit Sa (slit track SA) is not disposed. Then, in a part in the circumferential direction around the rotation center O in the slit track SI, two second slits Si adjacently arranged within one pitch (pitch P of the second slit Si) are disposed. In the variation, these two second slits Si serve as the first slit Sa in the embodiment described above. That is, two second slits Si correspond to an example of the first slit.

Moreover, as illustrated in FIG. 13, each of a plurality of first light receiving elements Pa (thin dot-hatching portions in FIG. 13) of the light receiving array PA is arranged on the split tracks t1, which are obtained by equally dividing, in the circumferential direction C, the first track T1 that is the region over the entire circumference around the light source 121 (rotational axis AX) corresponding to the first light receiving element Pa, by a number (32 in this example) set based on the resolution of the encoder 100. Moreover, a plurality of second light receiving elements Pi (thick dot-hatching portions in FIG. 13) of the light receiving array PI is overlappingly arranged so as to expose a part (a peripheral part of the second light receiving element Pi in this example) of a plurality of first light receiving elements Pa on the corresponding first light receiving elements Pa. Four second light receiving elements Pi are arranged, as with the embodiment, in the range of the angle θ corresponding to one pitch of the first light receiving element Pa. Note that WPI is set so as to be larger than ε times of WSI. Because the other configurations are the same as the embodiment, the description thereof is omitted.

In the variation, when the light source 121 emits light to a region that encompasses at least the slit track SI, the light reflected by the two second slits Si located at a predetermined rotation angle by rotation of the disk 110 is received by a corresponding exposed portion of first light receiving elements Pa among the plurality of first light receiving elements Pa that is arranged extending along the circumferential direction C around the light source 121 (rotational axis AX). Then, in the positional data generator 130 and each first light receiving element Pa, the threshold is set in the manner that with the amount of reflection light by one second slit Si the light receiving signal is "L" while with the amount of reflection light by two second slits Si, the light receiving signal becomes "H." As a result, with the resolution corresponding to the number of first light receiving elements Pa, a position (absolute position) within one rotation of the shaft SH is detected.

When attempting to achieve a further reduction in size of the encoder 100, a configuration may be employed, in which the light receiving array PA and the light receiving array PI are overlappingly arranged, as with the variation. As a result, both the slit side and the light receiving element side can be configured as one track, respectively.

(4-5. Others)

In the embodiment, a case has been described, in which the encoder 100 includes the slit track SI having the incremental pattern and the light receiving array PI configured to receive the light reflected by the slit track SI, but the encoder 100 does not necessarily include these slit track SI and light receiving array PI. That is, the encoder 100 includes the first slit Sa arranged in a part in the circumferential direction C around the rotation center O of the disk 110, and a plurality of first light receiving elements Pa that is arranged extending along the circumferential direction C arranged around the rotational axis AX and configured to receive the light reflected by the first slit Sa, in the manner that the position (absolute position) within one rotation of the shaft SH can be detected with a resolution corresponding to the number of corresponding first light receiving elements Pa.

Moreover, in the embodiment, the so-called reflection type encoder, in which the light source 121 and the light receiving arrays PA, PI are arranged on the same side with respect to the disk 110, has been taken as an example and described, but the type of the encoder is not limited thereto. That is, the encoder may be the so-called transmission type encoder, in which the light source 121 and the light receiving arrays PA, PI are arranged on the opposite sides across the disk 110. In this case, in the disk 110, the first slit Sa and the second slit Si may be formed as a light-transmissive slit, respectively, or alternatively the first slit Sa and the second slit Si may be formed by forming the disk 110 from a light-transmissive material, such as glass and a transparent resin, and turning the portion except the slit into a rough surface by sputtering or the like or applying a material having a low transmissivity. In the variation, the light source 121 and the light receiving arrays PA, PI are arranged on the opposite sides across the disk 110, but the optical module 120 in the variation includes the light source 121 and light receiving arrays PA, PI that are formed as separate bodies in this manner. Also when such a transmission type encoder is used, the similar effect as the effect of the embodiment is obtained.

DESCRIPTION OF SYMBOLS

| 100 | encoder |
|---|---|
| 110 | disk |
| 121 | light source |
| 130 | positional data generator (example of means for generating positional data) |
| AX | rotational axis |
| C | circumferential direction |
| CT | controller |
| M | motor |
| O | rotation center |
| Pa | first light receiving element |
| PI | light receiving array |
| Pi | second light receiving element |
| S | servo system |
| Sa | first slit |
| SH | shaft (example of rotating body) |
| SI | slit track |
| Si | second slit (example of first slit) |
| SM | servo motor |
| T1 | first track |
| t1 | split track |
| T2 | second track |
| t2 | split track |

**Claims**

1. An encoder comprising:

    a disk fixed to a rotating body;
    one or more first slits arranged on the disk in a part in a circumferential direction around a rotation center of the disk and each configured to reflect or transmit light;
    a light source arranged approximately on a rotational axis of the rotating body and configured to emit light to a region that encompasses at least a rotational locus of the first slit by rotation of the disk; and
    a plurality of first light receiving elements arranged extending along a circumferential direction around the rotational axis and configured to receive light that is reflected by or transmits through the first slit.

2. The encoder according to claim 1, further comprising:

    means for identifying a position within one rotation of the rotating body based on a light receiving signal of the first light receiving element and generating positional data.

3. The encoder according to claim 2, wherein:

    the first slit is configured to reflect light emitted from the light source, and
    the first light receiving element is configured to receive the light reflected by the first slit.

4. The encoder according to claim 2 or 3, wherein:

    the plurality of first light receiving elements is arranged on a first track that is a region over an entire circumference around the rotational axis corresponding to the first light receiving elements, and
    the means for generating positional data identifies the position within one rotation without using the light receiving signal, when the light emitted from the light source is reflected to a specific region of the first track by the first slit.

5. The encoder according to claim 4, wherein:

    each of the plurality of first light receiving elements is arranged on rest of split tracks, the split tracks being obtained by equally dividing the first track in the circumferential direction by a number set based on a resolution of the encoder, the rest of the split tracks being obtained by excluding any one of the split tracks from the split tracks, and
    the means for generating positional data identifies the position within one rotation without using the light receiving signal, when light emitted from the light source is reflected by the one split track.

6. The encoder according to any one of claims 1 to 5, further comprising:

    a slit track provided on the disk and including a plurality of second slits that is arranged so as to have an incremental pattern along a circumferential direction around the rotation center; and
    a light receiving array including a plurality of second light receiving elements arranged concentrically with the plurality of first light receiving elements about the rotational axis and arranged extending along a circumferential direction around the rotational axis, the light receiving array being configured to receive light that is reflected by or transmits through the slit track, wherein:

        the light source is configured to emit light to a region that encompasses at least both a rotation locus of the first slit and the slit track.

7. The encoder according to claim 6, wherein:

the one or more first slits are arranged on one track that is a region over an entire circumference around the rotation center, and
the second light receiving element is arranged in the number of two or four in an angle range corresponding to one pitch of the first light receiving element.

8. The encoder according to claim 6 or 7, wherein:

the plurality of first light receiving elements is arranged closer to the rotational axis than the light receiving array.

9. The encoder according to claim 6 or 7, wherein:

the plurality of first light receiving elements is arranged on an opposite side of the rotational axis from the light receiving array.

10. The encoder according to any one of claims 6 to 9, wherein:

the light receiving array is configured in a manner such that each of the second light receiving elements is arranged on rest of split tracks, the split tracks being obtained by equally dividing, in the circumferential direction, a second track that is a region over an entire circumference around the rotational axis corresponding to the light receiving array, by a number set based on a resolution of the encoder, the rest of the split tracks being obtained by excluding any one or more of the split tracks from the split tracks.

11. The encoder according to claim 10, wherein:

the light receiving array is configured in a manner such that each of the second light receiving elements is arranged on rest of the split tracks, the rest of the split tracks being obtained by excluding a plurality of the split tracks that is arranged at every 90° or 60° in a circumferential direction around the rotational axis from the second track.

12. The encoder according to any one of claims 6 to 11, wherein:

the plurality of first light receiving elements is arranged spaced apart by a predetermined distance from the light receiving array in a radial direction about the rotational axis.

13. The encoder according to any one of claims 6 to 11, wherein:

the plurality of first light receiving elements is arranged so as to contact the light receiving array in a radial direction about the rotational axis.

14. The encoder according to any one of claims 1 to 5, further comprising:

a slit track provided on the disk and including a plurality of second slits that is arranged so as to have an incremental pattern extending along a circumferential direction around the rotation center; and
a light receiving array including a plurality of second light receiving elements that is overlappingly arranged on the plurality of first light receiving elements so as to expose a part of the plurality of first light receiving elements and that is arranged extending along a circumferential direction around the rotational axis, the light receiving array being configured to receive light that is reflected by or transmits through the slit track, wherein:

the first slit is a plurality of second slits adjacently arranged in a part in a circumferential direction around the rotation center in the slit track, and
the light source is configured to emit light to a region that encompasses at least the slit track.

15. A motor with encoder comprising:

a motor whose rotor rotates with respect to a stator; and
an encoder according to any one of claims 1 to 14 configured to detect at least one of a position and speed of the rotor.

16. A servo system comprising:

a motor whose rotor rotates with respect to a stator;
an encoder according to any one of claims 1 to 14 configured to detect at least one of a position and speed of the rotor; and
a controller configured to control the motor based on a detection result of the encoder.

[FIG. 1]

[FIG. 2]

[FIG. 3]

EP 2 975 365 A1

[FIG. 4]

EP 2 975 365 A1

[FIG. 5]

EP 2 975 365 A1

[FIG. 6]

EP 2 975 365 A1

[FIG. 7]

[FIG. 8]

EP 2 975 365 A1

[FIG. 9]

EP 2 975 365 A1

[FIG. 10]

EP 2 975 365 A1

[FIG. 11]

EP 2 975 365 A1

[FIG. 12]

[FIG. 13]

EP 2 975 365 A1

## INTERNATIONAL SEARCH REPORT

| International application No. |
|---|
| PCT/JP2013/056696 |

### A. CLASSIFICATION OF SUBJECT MATTER
*G01D5/347*(2006.01)i

According to International Patent Classification (IPC) or to both national classification and IPC

### B. FIELDS SEARCHED

Minimum documentation searched (classification system followed by classification symbols)
G01D5/26-5/38

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br><br>A | WO 2005/095898 A1 (Mitsubishi Electric Corp.),<br>13 October 2005 (13.10.2005),<br>paragraph [0061]; fig. 14<br>& CN 1938565 A & DE 112005000685 T<br>& JP 4531750 B & KR 10-0818018 B1<br>& US 2007/0272840 A1 | 1<br>2-3,6-12,<br>15-16<br>4-5,13-14 |
| Y<br><br>A | JP 2011-149715 A (Nikon Corp.),<br>04 August 2011 (04.08.2011),<br>paragraphs [0004], [0010], [0012]; fig. 1 to 4<br>(Family: none) | 2-3,6-12,<br>15-16<br>4-5,13-14 |
| Y<br><br>A | JP 2004-69654 A (Olympus Corp.),<br>04 March 2004 (04.03.2004),<br>paragraphs [0061] to [0063]; fig. 7<br>(Family: none) | 2-3,6-12,<br>15-16<br>4-5,13-14 |

☒ Further documents are listed in the continuation of Box C. ☐ See patent family annex.

| * Special categories of cited documents: | | "T" later document published after the international filing date or priority date and not in conflict with the application but cited to understand the principle or theory underlying the invention |
|---|---|---|
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 03 June, 2013 (03.06.13) | 11 June, 2013 (11.06.13) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/056696

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2002-139353 A  (Olympus Optical Co., Ltd.),<br>17 May 2002 (17.05.2002),<br>paragraphs [0066] to [0075]; fig. 7, 8<br>& EP 1154242 A2          & US 2002/0014581 A1 | 10-11<br>4-5,13-14 |

Form PCT/ISA/210 (continuation of second sheet) (July 2009)

**REFERENCES CITED IN THE DESCRIPTION**

**Patent documents cited in the description**

• JP 5099459 B